# EUROPEAN PATENT APPLICATION

(11) **EP 1 743 515 A2**
(43) Date of publication of application: **17.01.2007**
(21) Application number: 06112586.0
(22) Date of filing: 13.04.2006
(51) Int. Cl.: A01D 46/26

(54) **Driving linkage in shakers and shaker provided with said linkage**

(30) Priority: 12.07.2005 IT MI20051316
(71) Applicant: Cifarelli S.p.A., 27058 Voghera (Pavia) (IT)
(72) Inventor: Cifarelli, Raffaele, 27058 VOGHERA (PAVIA) (IT)
(74) Representative: Ponzellini, Gianmarco

(57) **Abstract**

A driving linkage (1) for shakers comprises a crank-connecting rod assembly (2,3) to be interposed between a motor and a work axis (4), and it is further provided with means for amplifying the longitudinal stroke of the work axis (4); the linkage also comprises means for reducing the transverse stroke of the work axis (4) in at least one direction transverse to the first operating direction (A).

## Description

The present invention relates to a driving linkage to be installed in a shaker, and more particularly to a linkage to be interposed between the work rod and the motor of the shaker itself; at the same time, the present invention also concerns a shaker provided with such a driving leverage.

It is known that hand-held shakers are machines for agricultural use extensively employed when picking up of fruits such as olives, walnuts and the like is to be carried out; these machines are put on an operator's arm and have a hook placed at the end of a work axis which in turn is driven in a reciprocating motion (in such a manner as to cause vibration of the tree to which it is connected by means of said end hook) through a suitable powering system.

In devices of known type, the motive power for causing oscillation of the work axis and therefore transmitting the appropriate vibrations to the tree, is generally ensured by a thermal motor that is connected to the work axis through a normal driving mechanism of the crank-connecting rod type (and possibly, for particular motor arrangements relative to the machine body and/or the mounting and fitting points of the work axis, through suitable connections such as bevel gear pairs and others).

While the above described known art has been usually widely employed, it has some drawbacks.

In fact, although it is intrinsically very simple, the kinematic driving coupling of the crank-connecting rod type is often bulky (where very long strokes of the work axis are required, for example), so that, as a result, machine bodies or cases of great bulkiness are to be planned and used.

At the same time, the whole machine body is submitted to a great number of strong shaking actions in a direction transverse/perpendicular to the work axis, still as a result of the important reciprocating masses in a kinematic driving mechanism of the crank-connecting rod type, this involving great discomfort and inconvenience for the operator who has to put the shaker on his/her arm.

In addition, at the hinging points between the work axis and the connecting rod, great efforts are generated (and in particular side/axial thrusts causing early wear of the guide bushes) which are particularly important in terms of intensity, frequency and number of directions along which they are applied; this involves a great increase in the planning and construction costs and in conclusion a necessity to provide rather important sizes for the critical areas of the driving mechanism and/or the work axis.

It is finally to be pointed out that shakers of known type have a well defined stroke of the work axis, that cannot be modified at all; this greatly limits the shaker's usefulness because it may happen that under given situations (for instance, particularly strong tree branches or on the contrary not very flexible branches, and so on) the vibrations imparted to the tree as a function of a given stroke are insufficient or too strong.

Accordingly, the present invention aims at conceiving a driving linkage for shakers capable of obviating the above listed drawbacks.

More particularly, the present invention aims at conceiving a driving linkage enabling the sizes of the crank-connecting rod assembly to be reduced as mush as possible so as to minimise the reciprocating masses moving in directions transverse to the work axis; at the same time, the linkage in accordance with the present invention must enable the work axis to carry out strokes of any length, and in particular of rather important amounts, while maintaining a substantial size compactness.

Still, the present invention aims at conceiving a structurally efficient linkage in which the different connecting points between the elements in relative motion are subjected to mechanical stresses that are as much as possible reduced.

In addition, it is an aim of the present invention to conceive a shaker that, through exploitation of the above linkage, is also capable of varying the stroke of the work axis in a simple and quick manner, even when a fruit-picking operation is in progress.

Furthermore, it is an inherent aim of the present invention to make a linkage, and consequently a shaker, that are of simple manufacture and great reliability, in order to obtain a final product that can be used with ease and has low purchase and maintenance costs.

The foregoing and further aims that will become apparent in the course of the present specification are substantially achieved by a driving linkage for shakers, as well as by a shaker equipped with said linkage, having the features pointed out in one or more of the appended claims.

For explanation of the present inventive idea, an embodiment of a quick-hooking device in accordance with the present invention is given hereinafter by way of non-limiting example and illustrated in the accompanying drawings, in which:
- Fig. 1 is a perspective view of the inside of a shaker provided with a driving linkage in accordance with the present invention;
- Fig. 2 is a perspective view of the shaker shown in Fig. 1;

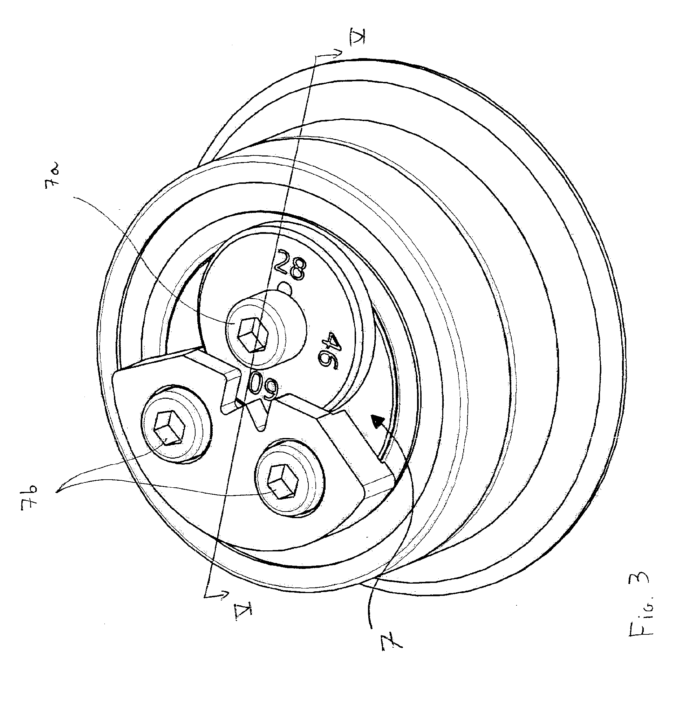

- Fig. 3 shows a construction detail of the shaker seen in Fig. 1 in a perspective view;
- Fig. 4 is a further perspective view showing details of the shaker seen in Fig. 1; and
- Fig. 5 is a cross-section view of the construction detail seen in Fig. 3, taken along line V-V.

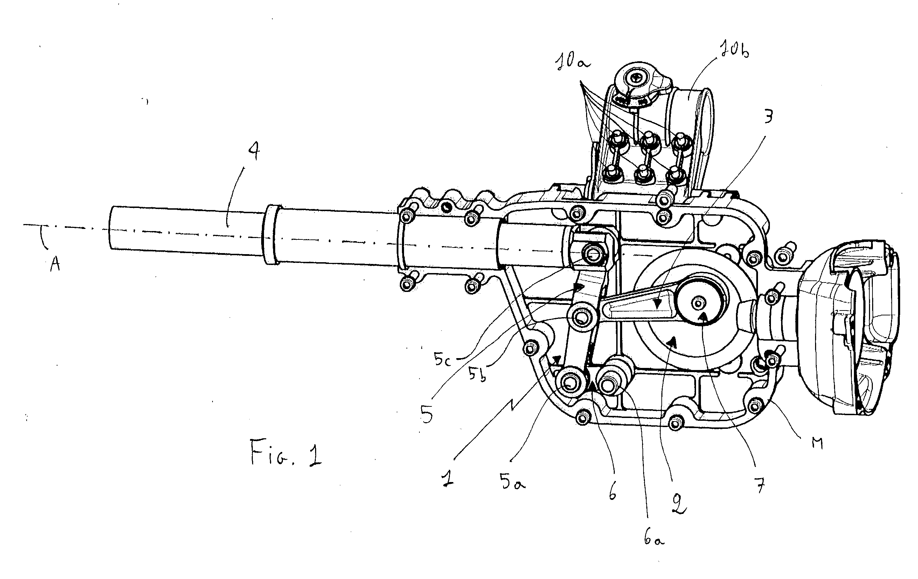

With reference to the drawings, the linkage in accordance with the present invention is generally identified with 1 and it substantially comprises a crank-connecting rod assembly (denoted at 2 and 3 respectively in the figures) that can be operatively interposed between a motor and a work axis 4, through a bevel gear pair transferring the motor motion, for example (which motor is not shown in the drawings but is in any case designed to be attached to the machine body M at the bell shown at the right end in Fig. 1).

Advantageously, also present is means for amplifying the longitudinal stroke of the work axis 4 along a first operating direction A (which in short is the axial direction along which the work axis 4 itself can be moved with a reciprocating motion).

In more detail, the longitudinal-stroke amplifying means, at least in the embodiment herein shown comprises a first oscillating element 5 (which advantageously can be a rod-like element or in any case an element of any conformation provided it is adapted to bear the requested loads); this first oscillating element 5 in turn has a first pivot pin 5a and at the same time is connected to the crank-connecting rod assembly at a second pivot pin 5b.

In addition, the first oscillating element 5 is connected to the work axis 4 at a third pivot pin 5c.

It should be noted at this point that the just described linkage can be used to obtain important deviations of the work axis 4; in fact, due to the oscillation of linkage 1 (and more particularly, due to movement of the first oscillating element 5), the total displacement value of the small end of the connecting rod 3 can be multiplied; in other words, if the crank-connecting rod assembly 2, 3 defines a given value of "nominal stroke" along the operating direction A, between its "bottom dead centre" and its "top dead centre", the linkage 1 makes the overall displacement imparted to the work axis 4 correspond to the just mentioned "nominal stroke" to which a value of "additional axial displacement" is added which is exactly generated by the linkage displacement (and more particularly, by the displacement of the extremity of the linkage 1 at the point said linkage is connected with the work axis 4).

In order to achieve the above explained stroke-amplifying effect, different architectures and/or geometries for the driving linkage 1 are possible; for instance, with reference to the accompanying figures, the first and third pivot pins 5a and 5c are positioned on opposite sides on the first oscillating element 5 relative to the second pivot pin 5b.

Conveniently the described solution allows the overall bulkiness of linkage 1 to be minimised and consequently enables minimisation of the sizes of the machine body M; at all events, should current requirements need it, the first and third pivot pins 5a and 5c can be placed on the same side, on the oscillating element 5, relative to the second pivot pin 5b.

In the simplest embodiment of the present invention, i.e. where only the first oscillating element 5 is present, at least the first pivot pin 5a is spatially movable and it moves along a complex trajectory; in addition, in this simple structural configuration (presence of the first oscillating element 5 alone), the third pivot pin 5c will be in any case submitted to periodic displacements along directions transverse to the direction of the work axis 4 (or in other words, to the first operating direction A).

Within the scope of the present invention, it is however possible to provide for the presence of means for reducing the transverse stroke of the work axis 4 in at least one direction transverse to the first operating direction A; in this way, shearing stresses (and correlated moments) are not transmitted to the work axis 4 and the resulting movement will merely be a reciprocating motion in a single direction.

With reference to the embodiment shown, the means for reducing the transverse stroke can advantageously comprise a second oscillating element 6 (of rod-like shape too, if possible) connected to the first oscillating element 5 at the first pivot pin 5a.

This second oscillating element 6 is conveniently pivotally mounted at a fourth pivot pin 6a which will typically be fixed with respect to the machine body M; in other words, the fourth pivot pin 6a is spatially fixed.

Due to the described "two-piece" architecture and the particular kinematic relationship of the different mutual-hinging points between the elements 5 and 6 and the crank-connecting rod assembly, only the pivot pin 5a will be submitted to periodic movements along any direction transverse to the first operating direction A, while at the junction/pivotal mounting point between the axis 4 and the first oscillating element 5 (i.e. at the third pivot pin 5c) only movements along the first operating direction A will occur.

Clearly, in order to achieve the described kinematic effect, different construction architectures can be provided; for instance, the driving linkage 1 according to the present invention can also be conceived in a form according to which the means for reducing the transverse stroke comprises a slide slot formed in the first oscillating element 5 at the third pivot pin 5c and a guide element to be operatively activated on the work axis 4 to enable movements of the latter exclusively along the first operating direction A; by suitably shaping the guide slot and suitably orienting the guide element (that from a kinematic point of view will correspond to a link of the "carriage" or "runner" type), the third pin 5c, to be mounted integrally with the work axis 4, will carry out a relative sliding with respect to the slide slot under operating conditions.

According to a further advantageous feature of the present invention, also present may be stroke-selecting means which can be operatively activated on the crank-connecting rod assembly and/or the first oscillating element 5 and/or the second oscillating element 6; this stroke-selecting means enables an operator to determine an increase or reduction in the oscillating stroke along the direction A, by means of few and simple operations.

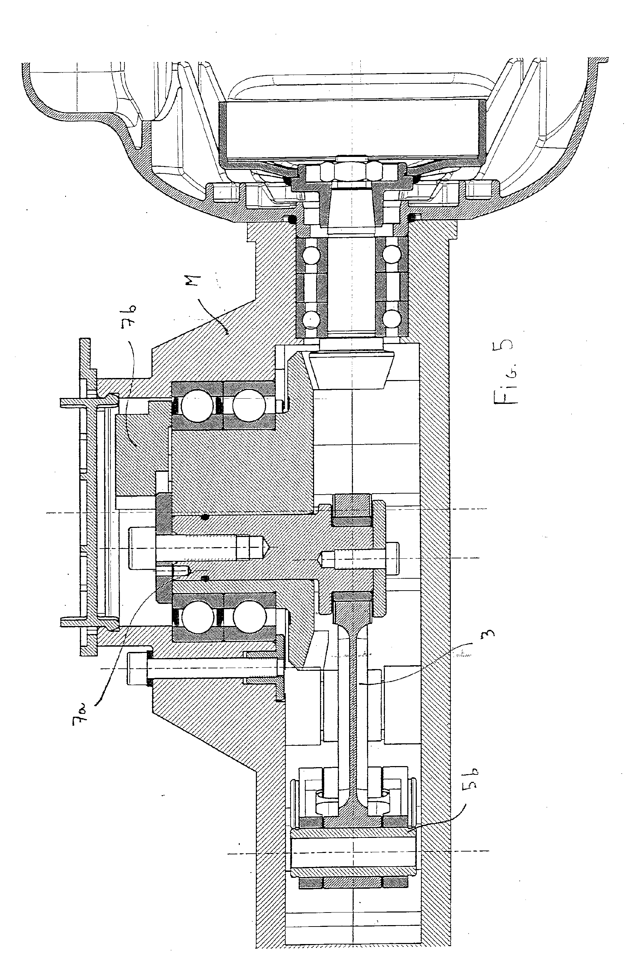

In the embodiment shown in Fig. 5, the stroke-selecting means comprises an element with an eccentric hole 7 bearing and dragging along an adjustment body 7a (that in other words is an eccentric element mounted within the element 7), which in turn is mounted on the connecting rod 3.

In other words, the eccentric element or adjustment body 7a is fitted into the crank-connecting rod assembly (typically, at an extremity of the connecting rod 3 itself, such as the small end of said connecting rod); this eccentric element or adjustment body 7a can be reversibly configured into a multiplicity of rotated conditions, so that to each of the infinite number of possible rotated conditions corresponds a predetermined radial positioning distance of the small end of the connecting rod 3, in turn involving a different value of the resultant stroke of the third pivot pin 5c of linkage 1.

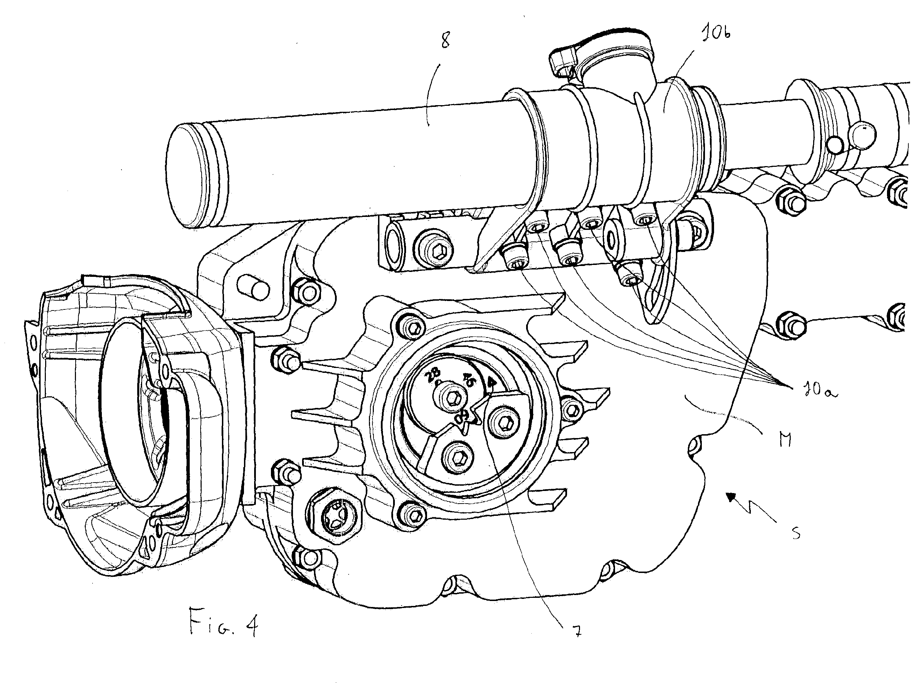

More particularly, it is also possible to see (for instance in Fig. 4) that an element provided with an eccentric hole 7 is present, which element supports and drags along the adjustment body 7a which in turn is operatively accessible to an operator to determine (in an arbitrary manner, i.e. by the operator's selection) one or more rotated conditions; at the same time, also present is at least one, and preferably two locking bodies 7b that in turn can be activated on the adjustment body 7a to fix a given rotated condition.

Operatively, a shaker's user in accordance with the present invention will be able to access to the element with an eccentric hole 7 (and therefore to the eccentric element or adjustment body 7a) through a (screenable) suitable opening in the outer face of the machine body M and will be able to adjust the desired stroke through operation of the adjustment body 7a by means of an Allen wrench or an equivalent tool, for example.

Conveniently, the stroke-selecting means can be also installed on a traditional motion-transmitting assembly for shakers, i.e. without the presence of the first and/or second oscillating elements 5 and/or 6 being required; at the same time it is to be pointed out that the oscillating elements 5 and/or 6 can be installed on a shaker, also of known type, without necessarily also carrying out installation of the stroke-selecting means.

It will be in addition recognised that the stroke-selecting means is preferably installed on the connecting rod 3 and more preferably on the small end of the connecting rod 3.

It is also an object of the present invention to provide a shaker S comprising a machine body M, a motor connected to the machine body and a work axis 4 operated through such a motor and emerging from the machine body M; advantageously, said shaker S will comprise a linkage 1 (operatively interposed between the motor and the work axis 4) in accordance with the above description and/or stroke-selecting means also in accordance with the above description.

The shaker in accordance with the present invention may be also provided with a gripping handle 8 and, conveniently, with means for adaptation of the gripping handle 8, which means is operatively interposed between the machine body M and the handle 8 itself, in order to improve the article's ergonomic character.

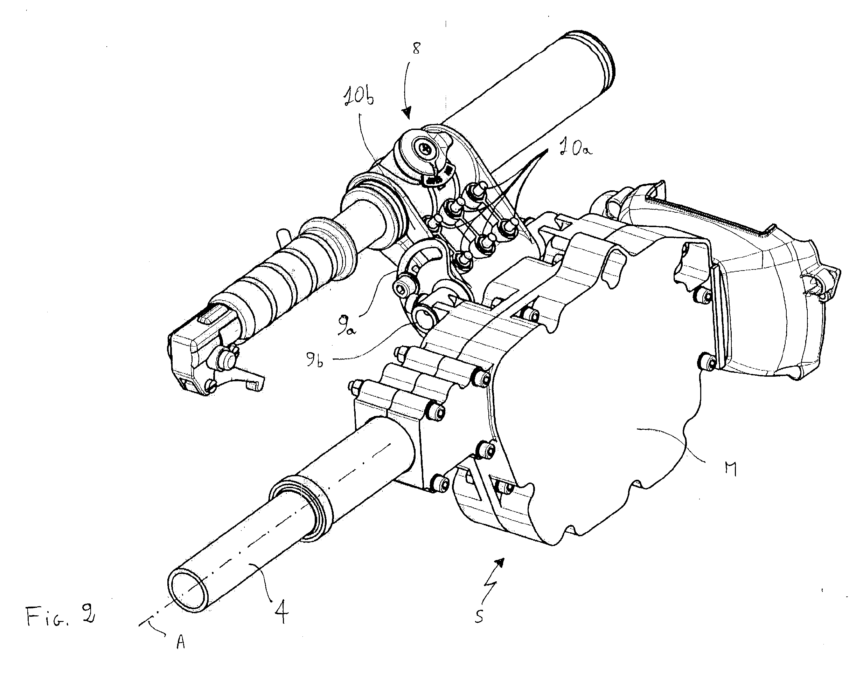

Still with reference to the figures, the adaptation means can comprise a rotating sleeve 10b pivotally mounted to the machine body at a hinging point 9b; this rotating sleeve 10b is designed to house a handle/handgrip 8 of any conformation and is possibly also equipped with suitable commands and controls for operation of the shaker (see Fig. 2).

Also present is a rotation slot 9a which is operatively active with respect to the rotating sleeve 10b to fix a predetermined fitting angle of the rotating sleeve 10b relative to the machine body M; depending on his/her personal requirements, an operator therefore will be able to cause rotation of the sleeve 10b and, once the most appropriate position has been found, to lock the sleeve 10b position, by suitably acting on the rotation slot 9a.

To give the handle/handgrip 8 a further possibility of adjustment, some tightening elements 10a are also present which can be operatively activated on the rotating sleeve 10b to secure the handle 8 to a predetermined axial position relative to the machine body M; operation of these tightening elements 10a enables the operator to loosen the sleeve grip on the handle and consequently pull out or push in the handle itself more towards the back or towards the front with respect to the sleeve.

Subsequently, on achievement of the position which is deemed the "optimal" one, the operator can act on the tightening elements 10a again, to lock handle 8.

The invention achieves important advantages.

First of all, it will be appreciated that the particular construction architecture of the invention allows use of "main connecting rods" of particularly reduced sizes; in this way, the deviations of the two extremities of the connecting rod in a direction perpendicular to that of the work axis keep very reduced and consequently also very reduced are the vibrations of the whole shaker in a direction perpendicular (or more generally transverse) to the work axis itself; this involves an important advantage in terms of comfort for the operator and, due to the overall reduction in the intensity of said vibrations, also an increase in the useful lifetime of the shaker itself.

At the same time it will be also recognised that the particular mechanism for "taking up" the deviations in a direction transverse to that of the work axis brings about a reduction in the stresses on the hinging point between the linkage and the work axis, so that lighter-in weight and more reliable links can be obtained.

In addition, it is to be pointed out that by a mere selection of the geometric parameters (and in particular the lengths) of the different linkage components, the resulting stroke of the work axis can be varied at will.

Then a further advantage in terms of operating flexibility resides in that it is possible to intervene on the stroke-selecting means, while maintaining the same linkage elements, so as to be able to adapt the stroke of the work axis to the current operating requirements in a very easy and quick manner (while the olive picking-up operation is being carried out, for example).

It is finally to be appreciated that, due to the intrinsic geometric simplicity of the linkage in accordance with the invention, manufacture of same can take place following very simple and cheap operating processes, which is advantageous in terms of production flexibility and reduction in the final cost of the product itself.

## Claims

1. A driving linkage for shakers, comprising a crank-connecting rod assembly (2, 3) to be operatively interposed between a motor and a work axis (4), said work axis (4) being movable with a reciprocating motion along a first operating direction (A), **characterised in that** it further comprises means for amplifying the longitudinal stroke of the work axis (4) along said first operating direction (A).

2. A linkage as claimed in claim 1, **characterised in that** said amplifying means of the longitudinal stroke comprises a first oscillating element (5) having a first pivot pin (5a) and connected to the crank-connecting rod assembly (2, 3) at a second pivot pin (5b), said first oscillating element (5) being further connected to the work axis (4) at a third pivot pin (5c).

3. A linkage as claimed in claim 2, **characterised in that** said first and third pivot pins (5a, 5c) are positioned on opposite sides on the first oscillating element (5) with respect to the second pivot pin (5b).

4. A linkage as claimed in anyone of the preceding claims, **characterised in that** at least the first pivot pin (5a) is spatially movable.

5. A linkage as claimed in anyone of the preceding claims, **characterised in that** it further comprises means for reducing the transverse stroke of the work axis (4) in at least one direction transverse to said first operating direction (A).

6. A linkage as claimed in claim 5, **characterised in that** said reducing means of the transverse stroke comprises a second oscillating element (6) connected to the first oscillating element (5) at the first pivot pin (5a) and pivotally mounted on a fourth pivot pin (6a).

7. A linkage as claimed in claim 6, **characterised in that** said fourth pivot pin (6a) is spatially fixed.

8. A linkage as claimed in claim 5, **characterised in that** said reducing means of the transverse stroke comprises a slide slot formed in the first oscillating element (5) at the third pivot pin (5c) and a guide element to be operatively activated on the work axis (4) to enable movements of the latter exclusively along the first operating direction (A), the third pivot pin (5c) being preferably integral with the work axis (4) and carrying out a relative sliding with respect to the slide slot under operating conditions.

9. A linkage as claimed in anyone of the preceding claims, **characterised in that** it further comprises stroke-selecting means to be operatively activated on the crank-connecting rod assembly (2, 3) and/or the first oscillating element (5) and/or the second oscillating element (6).

10. A linkage as claimed in claim 9, **characterised in that** said stroke-selecting means comprises an eccentric element or adjustment body (7a) fitted into the crank-connecting rod assembly (2, 3) and preferably at one extremity or small end of the connecting rod (3), which eccentric element or adjustment body (7a) can be reversibly configured into a multiplicity of rotated conditions, to each rotated condition corresponding a predetermined radial positioning distance of the small end of the connecting rod (3).

11. A linkage as claimed in claim 10, **characterised in that** it further comprises an element with an eccentric hole (7) bearing and dragging along said adjustment body (7a), said adjustment body (7a) being operatively accessible to an operator to determine said rotated conditions, the stroke-selecting means preferably further comprising at least one, and preferably two locking bodies (7b) to be activated on said adjustment body (7a) to fix a given rotated condition.

12. A driving linkage for shakers comprising a crank-connecting rod assembly (2, 3) to be operatively interposed between a motor and a work axis (4), said work axis (4) being movable with a reciprocating motion along a first operating direction (A), **characterised in that** it further comprises stroke-selecting means to be operatively activated on the crank-connecting rod assembly (2, 3), preferably on the connecting rod (3) an more preferably on the small end of the connecting rod (3).

13. A linkage as claimed in claim 12, **characterised in that** said stroke-selecting means comprises an eccentric element or adjustment body (7a) fitted into the crank-connecting rod assembly (2, 3) and preferably at one extremity or a small end of the connecting rod (3), which eccentric element or adjustment body (7a) can be reversibly configured into a multiplicity of rotated conditions, to each rotated condition corresponding a predetermined radial positioning distance of the small end of the connecting rod (3).

14. A linkage as claimed in claim 13, **characterised in that** it further comprises an element provided with an eccentric hole (7) bearing and dragging along said eccentric element or adjustment body (7a) which is operatively accessible to an operator to determine said rotated conditions, the stroke-selecting means preferably further comprising at least one, and preferably two locking bodies (7b) to be activated on said adjustment body (7a) to fix a given rotated condition.

15. A linkage as claimed in anyone of the preceding claims, **characterised in that** it further comprises amplifying means of the longitudinal stroke of the work axis (4) along said first operating direction (A), and preferably also reducing means of the transverse stroke of the work axis (4) in at least one direction transverse to said first operating direction (A), according to anyone of the preceding claims 1 to 11.

16. A driving linkage for shakers, comprising a crank-connecting rod assembly (2, 3) to be operatively interposed between a motor and a work axis (4), which work axis (4) can be movable with a reciprocating motion along a first operating direction (A), **characterised in that** it further comprises:
- a first oscillating element (5) having a first pivot pin (5a) and connected to the crank-connecting rod assembly (2, 3) at a second pivot pin (5b), said first oscillating element (5) being further connected to the work axis (4) at a third pivot pin (5c), said first and third pivot pins (5a, 5c) being positioned on opposite sides on the first oscillating element (5) with respect to the second pivot pin (5b); and
- a second oscillating element (6) connected to the first oscillating element (5) at the first pivot pin (5a) and pivotally mounted on a fourth pivot pin (6a).

17. A shaker (S) comprising a machine body (M), a motor connected to said machine body and a work axis (4) driven in motion through said motor and emerging from the machine body (M), **characterised in that** it further comprises a linkage (1) operatively interposed between said motor and work axis (4), according to anyone of the preceding claims.

18. A shaker as claimed in claim 17, **characterised in that** it further comprises at least one gripping handle (8) and adaptation means of the gripping handle that is operatively interposed between the machine body (M) and said handle (8).

19. A shaker as claimed in claim 18, **characterised in that** said adaptation means comprises a rotating sleeve (10b) pivotally mounted to the machine body at a hinging point (9b) and a rotation slot (9a) operatively active relative to said rotating sleeve (10b) to fix a predetermined fitting angle of the rotating sleeve (10b) with respect to the machine body.

20. A shaker as claimed in claim 18 or 10, **characterised in that** the adaptation means further comprises a predetermined number of tightening elements (10a) to be operatively activated on the rotating sleeve (10b) to secure the handle (8) to a predetermined axial position relative to the machine body (M).
